# EUROPÄISCHE PATENTSCHRIFT

(11) **EP 0 997 070 B1**
(45) Veröffentlichungstag und Bekanntmachung des Hinweises auf die Patenterteilung: **03.01.2001**
(21) Anmeldenummer: 98120265.8
(22) Anmeldetag: 27.10.1998
(51) Int. Cl.: A21D 13/08, A23G 3/26, A23G 3/00

(54) **Verfahren zur Herstellung von Waffelschnitten**
Method for the production of cream filled laminated wafer blocks
Procédé pour la fabrication des gauffres laminées avec crème de garniture

(43) Veröffentlichungstag der Anmeldung: 03.05.2000
(73) Patentinhaber: Salzburger Schokolade- und Süsswarenfabrik Gesellschaft m.b.H. & Co. KG, 5082 Grödig (AT)
(72) Erfinder: Faust, Robert, 5020 Salzburg (AT)
(74) Vertreter: Hofinger, Engelbert, Dr.Dr.

(56) Entgegenhaltungen:
- WO-A-86/01685
- GB-A- 416 970
- US-A- 4 349 574
- US-A- 4 391 832
- US-A- 5 147 669
- US-A- 5 201 403

## Beschreibung

Die Erfindung bezieht sich auf ein Verfahren zur Herstellung von quaderförmigen Waffelschnitten mit einem Überzug, insbesondere aus Schokolade.

Waffelschnitten entstehen, indem durch cremige Zwischenschichten verbundene Waffelstapel durch im rechten Winkel geführte Schnitte zerteilt werden. Die quader-oder würfelförmigen Schnitten können einen Überzug aus einer Schokolademasse aufweisen (vgl. W085/04075). Zur Erzeugung des Überzuges werden die Schnitten derzeit in flüssige Schokolade eingetaucht oder mit dieser übergossen. Wird das bekannte Produkt lose geschüttet in Beutel od.dgl. verpackt, erhält es durch das Aneinanderreiben der Schokoladenflächen leicht eine matte, angekratzte Oberfläche.

Zweck der Erfindung ist es, Waffelschnitten mit einer schokoladeartigen Auflage hinsichtlich Aussehen, Härte und Beständigkeit zu verbessern.

Dies wird durch ein Herstellungsverfahren erreicht, bei dem erfindungsgemäß Schnitten, bei denen die längste Seite höchstens doppelt so lang ist wie die kürzeste, in einer Dragiereinrichtung behandelt werden, in welcher der Überzug aufgebracht wird.

Das Dragieren ist an sich ein klassisches Verfahren zum Herstellen von Überzügen. Dabei wird das in Stücke geteilte Dragiergut in einem Kessel umgewälzt, während eine flüssige Masse aufgetragen wird, welche allmählich auf dem Dragiergut einen Überzug bildet. Die Masse kann aufgegossen oder aufgesprüht werden.

Dragiert wurden bisher grundsätzlich Rotationskörper, beispielsweise abgerundete Kekse, Nüsse, Rosinen, Arzneimittel in Tablettenform. GB-A-416 970 beschreibt die Herstellung von waffelgefüllten Schokoladenostereiern. Zwei Waffeleierhälften werden durch ein eßbares Material verbunden und anschließend im Dragierverfahren mit Schokolade überzogen. Das Dragieren von Waffelschnitten wurde bisher nicht vorgeschlagen. Gibt man die üblichen länglichen Schnitten in eine Dragiereinrichtung, so zeigt sich auch, daß während der Rotation im Kessel die Schnitten sich gegenseitig abbrechen, und daß vor allem an den Ecken hoher Abrieb entsteht. Gröberer Abrieb bindet sich durch die Schokolade unregelmäßig an der Oberfläche des Produktes, welches dadurch ein unansehnliches Äußeres erhält.

In Versuchen hat sich überraschend gezeigt, daß bei zunehmender Annäherung der Schnitten an die Würfelform die durch die Konsistenz der Waffelschnitten gegebenen Nachteile zurücktreten und die Vorzüge des Dragierverfahrens, nämlich eine nahtlose, geschlossene Oberfläche zu erreichen, überwiegen.

Hinsichtlich der im Rahmen der Erfindung verwendbaren Überzugsmaterialien besteht dabei große Freiheit, vor allem wenn der schokoladeartige Überzug primär unter geschmacklichen Überlegungen gewählt wird und auf diese Schicht eine harte Glanzschicht aufgetragen wird.

Ein Ausführungsbeispiel der Erfindung wird anschließend zu deren näheren Erläuterung beschrieben.

Die Waffelblöcke, bestehend aus fünf Lagen Waffelblättern und vier Füllschichten werden in Würfel mit einer Seitenlänge von 15 mm geschnitten. Die Waffelwürfel werden in einer Chargengröße von 10 kg in einen Drageekessel herkömmlicher Bauart gefüllt.

Die flüssige Schokolade wird mit einer Temperatur von ca. 35-40°C mittels einer Zweistoffdüse auf die im Kessel rotierenden Waffelwürfel aufgesprüht. Gleichzeitig wird durch Einblasen von Kaltluft die von der Oberfläche der rotierenden Würfel aufgenommene Schokolade durch Erstarrung verfestigt. Die Schokolade bildet eine unebene, aber geschlossene Oberfläche. Es darf nur soviel Schokolade gleichzeitig aufgesprüht werden, wie von den Würfeln aufgenommen werden kann, um Agglomerationen zu vermeiden.

Der Prozeß ist abgeschlossen, wenn die rezeptbezogene Schokoladenmenge aufdragiert ist. Danach wird die Ware dem Kessel entnommen und kaltgestellt. Nachdem die Schokoladeschicht ausreichend verfestigt ist, wird die Ware in einen Glanzkessel gefüllt. Der Glanzkessel entspricht im wesentlichen der herrkömmlichen Bauart eines Drageekessels.

Glanzmittel, welches hauptsächlich aus Gummiarabicum, gehärteten Fetten etc. besteht, wird durch Übergießen auf die im Glanzkessel rotierenden schokoladedragierten Würfel aufgebracht und auf der Oberfläche der Ware verteilt. Nach einer kurzen Verteilzeit wird durch Einblasen von Kaltluft das Glanzmittel abgetrocknet und die Ware bekommt eine hochglänzende Oberfläche, die sowohl das Produkt gegen Schokoladeabrieb schützt als auch die Optik wesentlich verbessert. Wenn das Glanzmittel abgetrocknet ist, wird die Ware dem Kessel entnommen und in Horden zwischengelagert und für die Verpackung bereit gehalten.

## Patentansprüche

1. Verfahren zur Herstellung von quaderförmigen Waffelschnitten mit einem schokoladeartigen Überzug, wobei Waffelschnitten mit cremigen Zwischenschichten verbundene und mit rechtwinkligen Schnitten zerteilte Waffelstapel sind, dadurch gekennzeichnet, daß Schnitten, bei denen die längste Seite höchstens doppelt so lang ist wie die kürzeste, in einer Dragiereinrichtung behandelt werden, in welcher der Überzug aufgebracht wird.

2. Verfahren nach Anspruch 1, dadurch gekennzeichnet, daß die Waffelschnitten würfelförmig sind.

3. Verfahren nach Anspruch 1 oder 2, dadurch gekennzeichnet, daß auf den schokoladeartigen Überzug eine Glanzschicht aufgebracht wird.

4. Verfahren nach Anspruch 3, dadurch gekennzeichnet, daß die Glanzschicht in einer Dragiereinrichtung aufgebracht wird.

## Claims

1. A process for manufacturing parallelepipedic wafer biscuits with a chocolate-like coating, wherein wafer biscuits are wafer stacks which are connected by creamy intermediate layers and cut up with right-angled cuts, characterised in that biscuits in which the longest side is at most twice as long as the shortest are treated in a circulatory coating device in which the coating is applied.

2. A process according to claim 1 characterised in that the wafer biscuits are in the form of cubes.

3. A process according to claim 1 or claim 2 characterised in that a glossy layer is applied to the chocolate-like coating.

4. A process according to claim 3 characterised in that the glossy layer is applied in a circulatory coating device.

## Revendications

1. Procédé pour la fabrication de parts de gaufre en forme de parallélépipèdes avec un enrobage à base de chocolat, lesdites parts de gaufre étant constituées de couches de gaufre superposées, reliées entre elles par des couches de crème intermédiaires et divisées en parts rectangulaires, caractérisé en ce que les parts, dont le côté long est au maximum deux fois plus long que le côté court, sont traitées dans une machine de dragéification, dans laquelle l'enrobage est appliqué.

2. Procédé selon la revendication 1, caractérisé en ce que les parts de gaufre sont de forme cubique.

3. Procédé selon la revendication 1 ou 2, caractérisé en ce qu'un glaçage est appliqué sur l'enrobage à base de chocolat.

4. Procédé selon la revendication 3, caractérisé en ce que le glaçage est appliqué dans une machine de dragéification.
